# EUROPÄISCHE PATENTSCHRIFT

(11) **EP 0 484 715 B1**
(45) Veröffentlichungstag und Bekanntmachung des Hinweises auf die Patenterteilung: **15.06.1994**
(21) Anmeldenummer: 91117794.7
(22) Anmeldetag: 18.10.1991
(51) Int. Cl.: B23D 27/00, B23D 35/00, B23B 31/113

(54) **Nibbelmaschine, insbesondere Handnibbelmaschine**
Nibbler, particularly hand nibbler
Machine à grignoter, en particulier à main

(30) Priorität: 03.11.1990 DE 9015155 U
(43) Veröffentlichungstag der Anmeldung: 13.05.1992
(73) Patentinhaber: Trumpf Grüsch AG, Grüsch (CH)
(72) Erfinder: Allemann, Marco, CH-7204 Untervaz (CH); Grobler, Hendrik W. Dr., CH-7212 Seewis (CH); Schmied, Kurt, CH-7208 Malans (CH)
(74) Vertreter: Schmid, Berthold, Dipl.-Ing.

(56) Entgegenhaltungen:
- DE-A- 3 839 738
- FR-A- 2 586 369
- US-A- 1 768 219
- US-A- 3 847 049

## Beschreibung

Die Erfindung bezieht sich auf eine Nibbelmaschine, insbesondere Handnibbelmaschine gemäß dem Oberbegriff der Ansprüche 1 und 2 (Siehe US-A-3 847 049). Die Festlegung des Zapfens durch einen Querstift oder ähnliche Verbindungsmittel hat den Nachteil, daß bei hoher Belastung Bruchgefahr besteht, da über dieses Teil die gesamten Kräfte in das Gehäuse geleitet werden. Beim Nibbeln treten nämlich sehr hohe Kräfte auf, welche die Verbindungsglieder außerordentlich stark belasten. Infolgedessen kann man diese bekannten Konstruktionsteile nur bei Maschinen benutzen, die zur Bearbeitung von Werkstücken verwendet werden, welche geringere Nibbelkräfte erfordern. Zur Aufnahme größerer Nibbelkräfte hat man daher die Verbindungszapfen mit Gewinde versehen, welche in das entsprechende Innengewinde des Gehäuses eingeschraubt werden. So können große Kräfte bei kleinstem Ringquerschnitt des Verbindungszapfens in das Gehäuse eingeleitet werden. Nun unterliegen jedoch Stempel und Matrize einem gewissen Verschleiß, so daß sie zum Nachschärfen oder Austauschen öfter aus- und eingebaut werden müssen. Das Ein- oder Ausschrauben eines Traggliedes mit Gewinde ist jedoch sehr zeitaufwendig. Ein weiterer Nachteil einer solchen Ausführungsform ist darin zu sehen, daß ein Verdrehen des Trägerteils gegenüber dem Gehäuse, um in eine andere Richtung nibbeln zu können, wegen der Steigung des Gewindes nur bei unterschiedlichen Einstellungen der Schneidkante des Stempels möglich ist.

Die Aufgabe der vorliegenden Erfindung ist es, die bekannte Nibbelmaschine der oben beschriebenen Art so zu gestalten, daß bei optimaler Einleitung der Kräfte in den Antriebskopf trotzdem ein schneller Wechsel der Nibbelwerkzeuge möglich wird. Zur Lösung dieser Aufgabe wird eine Nibbelmaschine gemäß dem Oberbegriff des Anspruchs 1 vorgeschlagen, die erfindungsgemäß entsprechend dem kennzeichnenden Teil desselben ausgebildet ist. Zur Befestigung des Traggliedes wird der Zapfen in einer entsprechenden Drehstellung in die Aufnahmeöffnung eingesetzt, um einen bestimmten Winkel verdreht, so daß die Vorsprünge in die Querausnehmungen eingreifen, und dann durch eine Sicherung am weiteren Verdrehen gehindert. Der Ausbau des Traggliedes erfolgt genauso einfach in umgekehrter Reihenfolge. Überdies kann man bei dieser Befestigungsart die zur Verbindung dienenden Teile so dimensionieren, daß sie auch stärksten Nibbelbeanspruchungen standhalten.

Die gleichen Probleme wie bei der Verbindung zwischen Tragglied und Antriebskopf ergeben sich auch bei Befestigung des Stempels am Stößel. Zu ihrer Lösung dienen die Merkmale des zweiten Anspruches.

Die Vorsprünge können in der verschiedensten Form ausgebildet sein. Eine besonders einfache Ausführung ergibt sich, wenn man den Vorsprung als Nase gestaltet. Statt dessen kann man am Zapfen aber auch einen Bund anordnen, welcher ein- oder mehrseitig abgeflacht ist. Durch die größere Zahl der hierdurch erreichten Vorsprünge bzw. durch ihre größere Auflagefläche können noch erheblich stärkere Kräfte aufgenommen werden. Bei einer bevorzugten Ausführungsform ist der Bund etwa viereckig ausgebildet.

Die Auflagefläche der Vorsprünge kann aber zusätzlich auch dadurch erhöht werden, daß in Achsrichtung des Zapfens gesehen, mehrere Vorsprünge übereinander vorgesehen sind. Vorzugsweise sind die Vorsprünge dabei als Gänge eines Außen- und die Ausnehmungen als Gänge eines Innengewindes ausgebildet. Bei dem Gewinde kann es sich um ein metrisches oder auch um ein Flachgewinde handeln, wobei man zweckmäßig die Steigung Null wählt.

Nach einem weiteren Merkmal der Erfindung ist als Verdrehsicherung ein Gewindestift vorgesehen, welcher in eine Aussparung am Zapfen eingreift. Der Stift kann relativ schwach gehalten werden, da er keinerlei vom Nibbeln herrührende Kräfte aufnehmen muß, sondern ausschließlich die Verdrehung verhindert. Um in einer anderen Richtung nibbeln zu können, muß das Tragglied gegenüber dem Antriebskopf verdreht werden. Um dies zu ermöglichen, sind am Zapfen mehrere Ausnehmungen für den Gewindestift vorgesehen. Auf eine Verdrehsicherung des Stempels gegenüber dem Stößel kann man verzichten, wenn der Stempel durch das Tragglied verdrehsicher geführt ist.

Die Zeichnung zeigt Ausführungsbeispiele der Erfindung. Es stellen dar:
- Fig. 1: Einen abgebrochenen vertikalen Längsschnitt im Bereich des Nibbelwerkzeuges einer Handnibbelmaschine,
- Fig. 2: einen Schnitt II-II nach Fig. 1,
- Fig. 3: den Schnitt III-III nach Fig. 1,
- Fig. 4: den Schnitt IV-IV nach Fig. 1,
- Fig. 5: den Schnitt V-V nach Fig. 2
- Fign. 6, 9, 12 und 15: abgebrochene Längsschnitte der Verbindungsstellen zwischen Tragglied und Antriebskopf,
- Fign. 7, 10, 13, und 16: entsprechende Querschnitte nach der Linie VI-VI,
- Fign. 8, 11, 14 und 17: entsprechende Querschnitte nach der Linie VII VII

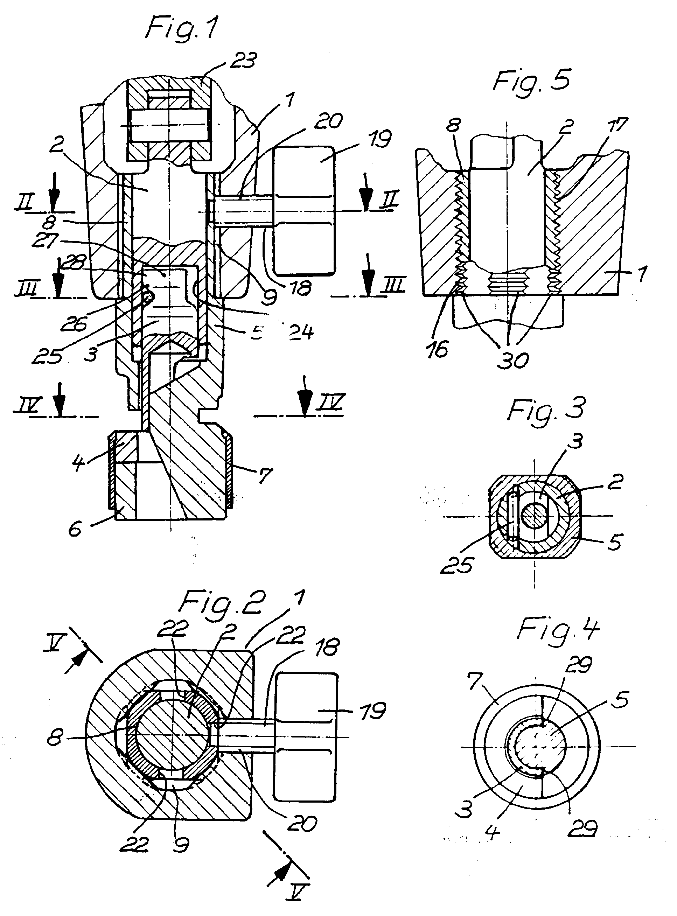

Die Handnibbelmaschine nach den Fign. 1 bis 5 weist einen im Einzelnen nicht dargestellten Antriebskopf 1 auf, der mit einem Stößel 2 mittels eines Pleuels 23 in axialer Richtung hin- und herbewegt wird. Der Stößel 2 ist mit einem Stempel 3 verbunden, welcher zusammen mit einer Matrize 4 das Werkzeug bildet. Zur Verbindung der Matrize 4 mit dem Antriebskopf 1 ist ein Tragglied 5 vorgesehen, auf dessen unterem Teil 6 die Matrize 4 aufliegt, wobei sie durch eine Überwurfhülse 7 gehalten wird. Das Tragglied 5 ist an seinem oberen Ende 8 als Zapfen ausgebildet und ragt in die Aufnahmeöffnung 9 des Antriebskopfes 1 hinein.

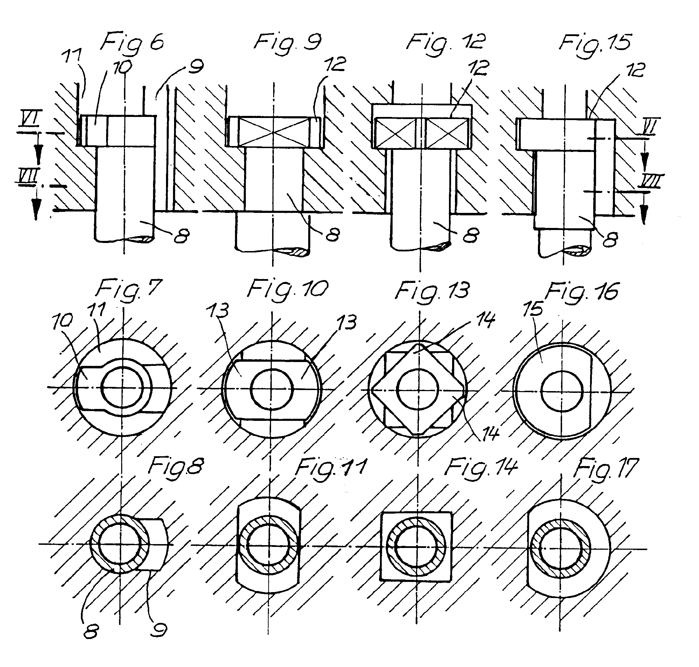

Die Verbindung zwischen diesen Teilen kann auf verschiedene Arten erfolgen, wobei jedoch jeweils Vorsprünge des Zapfens 8 in Querausnehmungen der Aufnahmeöffnung 9 eingreifen. Im Ausführungsbeispiel nach den Fign. 6 bis 8 ist am oberen Ende des Zapfens 8 eine Nase 10 vorgesehen. Der Querschnitt der Aufnahmeöffnung 9 entspricht demjenigen des Zapfens 8 in Höhe der Nase 10 und ist aus Fig. 8 ersichtlich. Für die Nase 10 ist in der Aufnahmeöffnung 9 eine Querausnehmung 11 vorgesehen. Der innerhalb der Aufnahmeöffnung 9 drehbare Zapfen 8 wird in eine gegenüber der in den Fign. 6 und 7 dargestellten Stellung um 180 ° verdreht, in die Aufnahmeöffnung 9 eingeschoben und anschließend in seine in Fig. 6 gezeigte Endstellung zurückgedreht, so daß der Zapfen 8 und der Antriebskopf 1 fest verbunden sind.

In den Fign. 9 bis 17 ist der Zapfen jeweils mit einem Bund 12 versehen. Dieser Bund ist in den Fign. 15 bis 17 einseitig, in den Fign. 9 bis 11 zweiseitig und in den Fign. 12 bis 14 vierseitig abgeflacht, wobei die vorstehenden Teile 13 in Fig. 10, 14 in Fig. 13 und 15 in Fig. 16 jeweils die Vorsprünge bilden. Aus den Fign. 8, 11, 14 und 17 ist der Querschnitt der Aufnahmeöffnung 9 unterhalb der Querausnehmung 11 zu erkennen. Das Einsetzen und Verriegeln erfolgt bei allen Ausführungsformen in der gleichen Weise wie es zu den Fign. 6 bis 8 bereits beschrieben wurde.

Im Ausführungsbeispiel nach den Fign. 1 bis 5 sind sowohl der Zapfen 8 als auch die Aufnahmeöffnung 9 mit vier Gewindesegmenten 30 versehen, wobei die Gewindegänge 16 des Außengewindes des Zapfens 8 als Vorsprünge und die Gewindegänge 17 des Innengewindes der Aufnahmeöffnung 9 als Querausnehmungen ausgebildet sind. Die in den Fign. 6 bis 17 nicht dargestellte Verdrehsicherung erfolgt hier durch einen Gewindestift 18, welcher mit Flügeln 19 zum Einschrauben ausgebildet ist. Der Gewindestift 18 ist in einer Gewindebohrung 20 des Antriebskopfes 1 angeordnet und greift mit seinem konischen Ende 21 in eine Aussparung 22 des Zapfens 8 ein. Fig. 2 zeigt noch weitere Aussparungen 22, so daß es möglich ist, zum Nibbeln in einer anderen Richtung das Tragglied 5 jeweils um 90° zu drehen und in dieser Lage durch den Gewindestift 18 festzulegen.

Die Verbindung zwischen dem im Tragglied 5 verschiebbar gelagerten Stößel 2 und dem Stempel 3 erfolgt in prinzipiell gleicher Weise wie zwischen dem Tragglied 5 und dem Antriebskopf 1. Der Querschnitt der Aufnahmebohrung 24 des Stößels 2 ist im oberen Teil durch einen Querstift 25 verengt, so daß sich anschließend eine Querausnehmung 26 ergibt. Der Zapfen 27 des Stempels 3 ist mit einem als Nase 28 ausgebildeten Vorsprung versehen und übergreift den Querstift 25 in seiner festgelegten Stellung. Um den Stempel 3 vom Stößel 2 zu lösen, ist auch hier wiederum eine Verdrehung um 180° erforderlich, worauf der Stempel ausgebaut werden kann. Wie Fig. 4 erkennen läßt, umgreift der Stempel 3 etwas mehr als halbkreisförmig das Tragglied 5 und wird mit seinen Längskanten 29 verdrehsicher an diesem geführt. Da das Tragglied 5 seinerseits durch den Gewindestift 18 verdrehsicher festgelegt ist, wird infolgedessen für den Stempel 3 keine zusätzliche Verdrehsicherung benötigt.

## Patentansprüche

1. Nibbelmaschine, insbesondere Handnibbelmaschine mit einem aus Matrize (4) und Stempel (3) bestehenden Werkzeug, wobei sich die Matrize (4) an dem Antriebskopf (1) der Nibbelmaschine über ein Tragglied (5) abstützt, welches mit einem zapfenartigen Ansatz (8) lösbar in einer Aufnahmeöffnung (9) am Antriebskopf (1) festgelegt ist, wobei der in der Aufnahmeöffnung (9) drehbare zapfenartige Ansatz (8) quer zu seiner Längsachse einen oder mehrere Vorsprünge (10, 13 bis 16) aufweist und eine Verdrehsicherung (18) für den zapfenartigen Ansatz (8) vorgesehen ist, dadurch gekennzeichnet, daß die Aufnahmeöffnung (9) eine der Anzahl der Vorsprünge (10, 13 bis 16) entsprechende Anzahl von Querausnehmungen (11) aufweist, wobei der zapfenartige Ansatz (8) mit seinem Umfang in mindestens einer Drehstellung gegenüber der Aufnahmeöffnung (9) über die Länge derselben hinweg innerhalb des Aufnahme-Öffnungsquerschnittes liegt und in wenigstens einer anderen Drehstellung diesen Querschnitt mit seinen Vorsprüngen (10, 13 bis 16) überragt.

2. Nibbelmaschine, insbesondere Handnibbelmaschine mit einem aus Matrize (4) und Stempel (3) bestehenden Werkzeug, wobei sich die Matrize (4) an dem Antriebskopf (1) der Nibbelmaschine über ein Tragglied (5) abstützt, welches mit einem zapfenartigen Ansatz (8) lösbar in einer Aufnahmeöffnung (9) am Antriebskopf (1) festgelegt ist und mit einem Stempel (3), der mit einem Zapfen (27) in einer Aufnahmebohrung (24) eines Stößels (2) befestigt ist, dadurch gekennzeichnet, daß der in der Aufnahmebohrung (24) drehbare Zapfen (27) quer zu seiner Längsachse wenigstens einen Vorsprung (28) und die Aufnahmebohrung (24) eine der Anzahl der Vorsprünge (28) entsprechende Anzahl von Querausnehmungen (26) aufweist, sowie eine Verdrehsicherung für den Zapfen (27) vorgesehen ist, wobei der Zapfen (27) mit seinem Umfang in mindestens einer Drehstellung gegenüber der Aufnahmebohrung (24) über die Länge derselben innerhalb des Aufnahmeöffnungsquerschnittes liegt und in wenigstens einer anderen Drehstellung diesen Querschnitt mit seinen Vorsprüngen (28) überragt.

3. Nibbelmaschine, insbesondere Handnibbelmaschine nach einem oder beiden der vorhergehenden Ansprüchen, dadurch gekennzeichnet, daß der Vorsprung als Nase (10, 28) ausgebildet ist.

4. Nibbelmaschine, insbesondere Handnibbelmaschine nach einem oder mehreren der vorhergehenden Ansprüche, gekennzeichnet durch einen am Zapfen als Vorsprung angeordneten Bund (12), welcher ein- oder mehrseitig abgeflacht ist.

5. Nibbelmaschine, insbesondere Handnibbelmaschine nach Anspruch 4, dadurch gekennzeichnet, daß der Bund (12) etwa viereckig ausgebildet ist.

6. Nibbelmaschine, insbesondere Handnibbelmaschine nach einem der vorhergehenden Ansprüche, dadurch gekennzeichnet, daß der Zapfen (8) in Achsrichtung mehrere Vorsprünge (16, 17) übereinander aufweist.

7. Nibbelmaschine, insbesondere Handnibbelmaschine nach einem oder beiden der Ansprüche 1 oder 2 und 6, dadurch gekennzeichnet, daß die Vorsprünge als Gänge (16) eine Außen- und die Ausnehmungen als Gänge (17) eines Innengewindes ausgebildet sind.

8. Nibbelmaschine, insbesondere Handnibbelmaschine nach Anspruch 7, gekennzeichnet durch ein Gewinde ohne Steigung.

9. Nibbelmaschine, insbesondere Handnibbelmaschine nach einem der beiden Ansprüche 7 oder 8, gekennzeichnet durch ein Flachgewinde.

10. Nibbelmaschine, insbesondere Handnibbelmaschine nach einem oder mehreren der vorhergehenden Ansprüche, dadurch gekennzeichnet, daß als Verdrehsicherung ein Gewindestift (18) vorgesehen ist, welcher in einer Aussparung (22) am Zapfen (8) eingreift.

11. Nibbelmaschine, insbesondere Handnibbelmaschine nach Anspruch 10, dadurch gekennzeichnet, daß am Zapfen (8) mehrere Aussparungen (22) vorgesehen sind.

12. Nibbelmaschine, insbesondere Handnibbelmaschine nach Anspruch 2, dadurch gekennzeichnet, daß der Stempel (3) verdrehsicher am Tragglied (5) geführt ist.

## Claims

1. Nibbler, in particular a hand nibbler with a tool consisting of a bottom die (4) and a top die (3), wherein the bottom die (4) is supported on the drive head (1) of the nibbler via a supporting member (5), which is secured on the drive head (1) detachably in an accommodating aperture (9) by means of a pin-type projection (8), wherein the pin-type projection (8) which is rotatable in the accommodating aperture (9) comprises one or more projections (10, 13 to 16) transverse to its longitudinal axis, and a means of securing against rotation (18) is provided for the pin-type projection (8), characterised in that the accommodating aperture (9) comprises a number of transverse recesses (11) corresponding to the number of projections (10, 13 to 16), wherein the pin-type projection (8) is located with its periphery in at least one rotational position opposite the accommodating aperture (9) and extending over the length thereof within the accommodating aperture cross-section, and, in at least one other rotational position, projects beyond this cross-section with its projections (10, 13 to 16).

2. Nibbler, in particular a hand nibbler with a tool consisting of a bottom die (4) and a top die (3), wherein the bottom die (4) is supported on the drive head (1) of the nibbler by means of a supporting member (5), which is secured on the drive head (1) in a detachable manner in an accommodating recess (9) by means of a pin-type projection (8) and with a top die (3), which is secured by means of a pin (27) in an accommodating bore (24) of a plunger (2), characterised in that the pin (27) which is rotatable in the accommodating bore (24) comprises at least one projection (28) transverse to its longitudinal axis, and the accommodating bore (24) comprises a number of transverse recesses (26) which corresponds to the number of projections (28), and a means of securing against rotation is provided for the pin (27), wherein the pin (27) is, in at least one rotational position, located with its periphery opposite the accommodating bore (24) and over the length thereof within the cross-section of the accommodating aperture, and in at least one other rotational position projects beyond this cross-section with its projections (28).

3. Nibbler, in particular a hand nibbler according to either or both of the preceding claims, characterised in that the projection is formed as a nose (10, 28).

4. Nibbler, in particular a hand nibbler, according to one or more of the preceding claims, characterised by a collar (12) which is disposed as a projection on the pin and which is flattened on one or more sides.

5. Nibbler, in particular a hand nibbler, according to Claim 4, characterised in that the collar (12) is approximately rectangular.

6. Nibbler, in particular a hand nibbler according to one of the preceding claims, characterised in that the pin (8) has a plurality of projections (7, 16) above one another in the axial direction.

7. Nibbler, in particular a nibbler according to either or both of Claims 1 or 2 and 6, characterised in that the projections are formed as the path (16) of an external thread and the recesses are formed as the path (17) of an internal thread.

8. Nibbler, in particular a hand nibbler according to Claim 7, characterised by a thread without an inclination.

9. Nibbler, in particular a hand nibbler according to either of Claims 7 and 8, characterised by a flat thread.

10. Nibbler, in particular a hand nibbler, according to one or more of the preceding claims, characterised in that a threaded pin (18) is provided as a means of securing against rotation, which engages a recess (22) in the pin (8).

11. Nibbler, in particular a hand nibbler, according to Claim 10, characterised in that a plurality of recesses (22) are provided on the pin (8).

12. Nibbler, in particular a hand nibbler according to Claim 2, characterised in that the upper die (3) is guided in a manner secure against rotation on the supporting member (5).

## Revendications

1. Machine à grignoter, en particulier grignoteuse à main ou portative, comprenant un outil constitué d'une matrice (4) et d'un poinçon (3), dans laquelle la matrice (4) s'appuie sur la tête d'entraînement (1) de la machine à grignoter par l'intermédiaire d'un support (5) fixé amovible, par un prolongement (8) semblable à une queue, dans une ouverture formant logement (9) de la tête d'entraînement (1) et dans laquelle le prolongement (8) semblable à une queue, disposé rotatif dans le logement (9), présente une ou plusieurs saillies (10, 13 à 16) transversalement à son axe longitudinal et un blocage (18) est prévu pour empêcher la rotation du prolongement (8) semblable à une queue, caractérisée en ce que le logement (9) présente des évidements transversaux (11) dont le nombre correspond au nombre des saillies (10, 13 à 16), le prolongement (8) semblable à une queue étant situé par sa périphérie, à au moins une position angulaire par rapport au logement (9), à l'intérieur de la section droite de ce logement et sur toute la longueur de celui-ci, et dépassant de cette section droite, par ses saillies (10, 13 à 16), dans au moins une autre position angulaire.

2. Machine à grignoter, en particulier grignoteuse à main ou portative, comprenant un outil constitué d'une matrice (4) et d'un poinçon (3), dans laquelle la matrice (4) s'appuie sur la tête d'entraînement (1) de la machine à grignoter par l'intermédiaire d'un support (5) fixé amovible, par un prolongement (8) semblable à une queue, dans une ouverture formant logement (9) de la tête d'entraînement (1), et dans laquelle le poinçon (3) est fixé par une queue (27) dans un alésage formant logement (24) d'un coulisseau (2), caractérisée en ce que la queue (27), rotative dans le logement (24), présente au moins une saillie (28) transversalement à son axe longitudinal et le logement (24) présente des évidements transversaux (26) dont le nombre correspond au nombre des saillies (28), un blocage étant prévu en plus pour empêcher la rotation de la queue (27), laquelle est située par sa périphérie, à au moins une position angulaire par rapport au logement (24), à l'intérieur de la section droite de ce logement et sur toute la longueur de celui-ci, et dépasse de cette section droite, par ses saillies (28), à au moins une autre position angulaire.

3. Machine à grignoter, en particulier grignoteuse à main, selon l'une ou les deux revendications précédentes, caractérisée en ce que la saillie est réalisée sous la forme d'un taquet (10, 28).

4. Machine à grignoter, en particulier grignoteuse à main, selon une ou plusieurs des revendications précédentes, caractérisée par un collet (12) disposé en tant que saillie sur la queue et qui est réduit par un méplat sur un ou plusieurs côtés.

5. Machine à grignoter, en particulier grignoteuse à main, selon la revendication 4, caractérisée en ce que le collet (12) est à peu près quadrangulaire.

6. Machine à grignoter, en particulier grignoteuse à main, selon une des revendications précédentes, caractérisée en ce que la queue (8) présente plusieurs saillies (16, 17) superposées en direction axiale.

7. Machine à grignoter, en particulier grignoteuse à main, selon l'une ou les deux revendications 1, 2 et la revendication 6, caractérisée en ce que les saillies sont constituées par les spires (16) d'un filetage extérieur et les évidements sont constitués par les spires (17) d'un filetage intérieur.

8. Machine à grignoter, en particulier grignoteuse à main, selon la revendication 7, caractérisée par un filet sans pas.

9. Machine à grignoter, en particulier grignoteuse à main, selon l'une des deux revendications 7 et 8, caractérisée par un filet rectangulaire.

10. Machine à grignoter, en particulier grignoteuse à main, selon une ou plusieurs des revendications précédentes, caractérisée en ce que le blocage pour empêcher la rotation est formé par une tige filetée (18) pénétrant dans une cavité (22) de la queue (8).

11. Machine à grignoter, en particulier grignoteuse à main, selon la revendication 10, caractérisée en ce que plusieurs cavités (22) sont prévues sur la queue (8).

12. Machine à grignoter, en particulier grignoteuse à main, selon la revendication 2, caractérisée en ce que le poinçon (3) est guidé sans pouvoir tourner sur le support (5).
